# EUROPÄISCHE PATENTSCHRIFT

(11) **EP 4 345 703 B1**
(45) Veröffentlichungstag und Bekanntmachung des Hinweises auf die Patenterteilung: **16.04.2025**
(21) Anmeldenummer: 22199167.2
(22) Anmeldetag: 30.09.2022
(51) Int. Cl.: G06Q 10/06

(54) **VERFAHREN FÜR EINE COMPUTER-GESTÜTZTE INSTALLATION VON RÄUMLICH DEZENTRAL ANGEORDNETEN, ELEKTRISCHEN KOMPONENTEN EINER MASCHINE**
METHOD FOR COMPUTER-ASSISTED INSTALLATION OF ELECTRICAL COMPONENTS OF A MACHINE ARRANGED IN A SPATIALLY DECENTRALISED MANNER
PROCÉDÉ D'INSTALLATION ASSISTÉE PAR ORDINATEUR DE COMPOSANTS ÉLECTRIQUES D'UNE MACHINE AGENCÉS DE MANIÈRE DÉCENTRALISÉE DANS L'ESPACE

(43) Veröffentlichungstag der Anmeldung: 03.04.2024
(73) Patentinhaber: Murrelektronik GmbH, 71570 Oppenweiler (DE)
(72) Erfinder: ZELLER, Paul, 74223 Flein (DE); PFESTORF, Sebastian, 71522 Backnang (DE)
(74) Vertreter: Bösherz Goebel Patentanwälte

(56) Entgegenhaltungen:
- EP-A1- 3 244 286
- EP-A2- 1 383 061
- DE-A1- 102016 107 560

## Beschreibung

### Technisches Gebiet

Die vorliegende Erfindung betrifft allgemein das Gebiet der Planung und Montage von Maschinen wie Automatisierungsanlagen, und insbesondere eine computer-gestützte Installation von räumlich dezentral angeordneten, elektrischen Komponenten einer Maschine.

### Hintergrund

Die Komplexität und Vielfalt von Automatisierungsanlagen, die entwickelt, geplant, installiert, gewartet, und repariert werden müssen, wird immer größer. In allen Phasen des Lebenszyklus einer solchen Anlage wie der Entwicklung/Planung, Produktion, Inbetriebsetzung, Betrieb und Wartung wird eine effiziente und effektive Unterstützung für einen Installateur oder Planer durch eine umfangreiche und vor allem vollständige Dokumentation immer wichtiger. Diesem Anspruch wird die in der Praxis vorliegende Dokumentation, beispielsweise in Form von Schaltplänen, allerdings nicht immer gerecht, da durch schlecht aufeinander abgestimmte Arbeitsprozesse oder durch die Verwendung von schlecht aufeinander abgestimmten Dokumentationstools Installationsaktivitäten nicht ausreichend oder nicht vollständig eingetragen werden. Diese bekannten Umstände führen zwangsläufig zu Dokumentationslücken in der Anlagendokumentation, was eine zuverlässige Wartung oder Reparatur einer Anlage erschwert bzw. im schlimmsten Fall unmöglich macht. DE 10 2016 107560 offenbart ein Lebenszyklus-Managementsystem für Anlagenkomponenten. EP 1 383 061 offenbart ein Verfahren zur Erstellung eines Anlagenkonzepts aus einer Anzahl von Anlagenkomponenten. EP 3 244 286 offenbart ein Verfahren zur Installation von physischen Einheiten.

Es ist daher eine Aufgabe, die der Erfindung zugrunde liegt, ein computer-gestütztes Verfahren und ein System bereitzustellen, um eine einfachere, schnellere und sichere Installation von elektrischen Komponenten zu ermöglichen und dabei die oben genannten Nachteile des Standes der Technik zumindest teilweise zu überwinden.

### Zusammenfassung der Erfindung

Die voranstehende Aufgabe wird gelöst durch ein Verfahren, System, Computerprogramm sowie eine Vorrichtung zur Datenverarbeitung gemäß den unabhängigen Patentansprüchen.

Weitere Merkmale und Details der Erfindung ergeben sich aus den jeweiligen Unteransprüchen, der Beschreibung und den Zeichnungen.

Gegenstand der Erfindung ist insbesondere ein Verfahren für eine computer-gestützte, insbesondere elektrische, Installation von räumlich dezentral angeordneten und/oder elektrischen Komponenten einer Maschine, insbesondere einer Anlage.

Die Maschine kann als wenigstens eine der nachfolgend genannten Maschinen ausgebildet sein:
- Eine Automatisierungsanlage,
- Eine Produktionsanlage,
- Eine Logistikanlage,
- Eine Produktionsstraße,
- Ein Bearbeitungszentrum,
- Ein Industrieroboter,
- Eine Fertigungsanlage,
- Ein Aggregat,
- Ein Elektrogerät.

Insbesondere kann die Maschine dabei als eine Maschine mit modularem Charakter oder auch als mobile oder bewegliche Maschine ausgebildet sein, bei welcher einzelne Teile der Maschine modular gemäß einer Installationsvorgabe installiert werden. Diese Installation erfolgt zumindest teilweise manuell durch einen Benutzer wie einen Werker.

Die elektrischen Komponenten können Verbindungsmodule umfassen, welche eine dezentrale und modulare Verbindung von Installationselementen ermöglichen. Dezentral kann sich dabei darauf beziehen, dass die Verbindungsmodule zumindest teilweise einen zentralen Schaltschrank ersetzen, indem die Verbindungsmodule zwar jeweils nur einen Teil der Verbindungen für die Maschine bereitstellen, diese Verbindungen aber dezentral im Feld ermöglichen. Bei einer zentralen Topologie, also bspw. einem zentralisierten Schaltschrankkonzept, wird insbesondere von einer Punkt-zu-Punkt-Verbindung gesprochen, d.h. der Startpunkt, die Verbindung und der Endpunkt sind klar definiert. Im Gegensatz dazu ist es bei dezentralen Anwendungen möglich, bzw. kann sogar oftmals notwendig sein, zwischen dem Startpunkt und dem Endpunkt mehrere Komponenten anzuordnen oder zu verbinden. In diesem Fall kann z. B. von einer Modul-Modul oder Modul-Hub-Punkt-Verbindung gesprochen werden. Grundsätzlich können bei einer Maschine bspw. die folgenden Komponenten vorgesehen sein: Geräte wie Aktoren und/oder Sensoren, die Verbindungsmodule, Installationselemente, bspw. zur Verkabelung.

Das erfindungsgemäße Verfahren kann dabei die nachfolgenden Schritte umfassen, welche vorzugsweise nacheinander oder in beliebiger Reihenfolge ausgeführt werden, wobei die Schritte auch automatisiert und/oder wiederholt ausgeführt werden können:
- Bereitstellen einer Installationsreferenz, insbesondere einer historischen Installation, welche eine Zuordnung wenigstens eines Installationselements, vorzugsweise eines Kabels und/oder eines Bauteils, und wenigstens einer elektrischen Komponente, vorzugsweise in der Form eines Verbindungsmoduls zur Verbindung mit dem Installationselement und weiteren Installationselementen, für die Installation spezifiziert,
- Bereitstellen einer Anlagenspezifikation, welche für Segmente der Maschine spezifisch ist, wobei vorzugsweise die Segmente die Maschine funktional und/oder räumlich unterteilen, wobei die Segmente entsprechend als unterschiedliche Teile der Maschine aufgefasst werden können,
- Erzeugen wenigstens einer Installationsinformation zur Unterstützung eines Benutzers, insbesondere Werkers oder Planers oder Installateurs, für die (computer-gestützte) Installation basierend auf der bereitgestellten Installationsreferenz und der bereitgestellten Anlagenspezifikation.

Dies hat den Vorteil, dass ein automatisiertes Montage- und/oder Dokumentationssystem bereitgestellt werden kann. Dieses ermöglicht eine einfachere, schnellere und fehlerfreiere Installation, insbesondere Verkabelung. Diese Optimierung kann vorzugsweise dadurch bereitgestellt werden, dass die wenigstens eine Installationsinformation in der Form einer Installationsanweisung für den Benutzer ausgegeben wird. Dabei kann die wenigstens eine Installationsinformation wenigstens eine maschinenindividuelle Installationsanweisung auf Basis der Installationsreferenz, vorzugsweise historischen Referenzmaschinen, umfassen. Auch kann die wenigstens eine Installationsinformation eine Angabe und/oder Initiierung wenigstens einer maschinenindividuellen Unterstützungsmaßnahme umfassen. Ferner kann eine maschinenindividuelle Ausgabe der Installationsanweisung an der Maschine und/oder im digitalen Zwilling möglich sein.

Informationen wie die Installationsreferenz und/oder die Anlagenspezifikation und/oder eine Installationsvorgabe können bspw. über wenigstens eine Schnittstelle bereitgestellt werden.

Die Installationsvorgabe kann z. B. die Anlagenspezifikation umfassen, und optional noch weitere Informationen über einen mechanischen und/oder elektrischen Aufbau der Maschine. Die Installationsvorgabe und vorzugsweise die Anlagenspezifikation kann bspw. umfassen: mCAD-Daten (bspw. mechanische Anordnung Komponenten, Aktoren, Sensoren und Module, sowie deren mechanischen Funktionalitäten und das Erscheinungsbild der Maschine) und/oder eCAD-Daten (bspw. elektrische Verkabelungsvorschrift zur Erfüllung der Funktionalität der Komponenten, Signalleitungen und Versorgungsleitungen) und/oder ergänzende Inhalte (wie z.B. Scans der Maschine, bzw. von Anlagenkomponenten) und/oder Anlagenumgebungsdaten. Die bereitgestellten Informationen können, nachdem sie eingelesen wurden, in einem Datenspeicher hinterlegt werden. Ferner kann der oder ein weiterer Datenspeicher wenigstens ein historisches Referenzprojekt umfassen, welches als Ganzes oder als Teilprojekte, d. h. Projektsegmente, als Installationsreferenz hinterlegt wird. Die Installationsreferenz kann ferner Richtlinien für Installationstätigkeiten umfassen, welche in dem gleichen oder einen weiteren Datenspeicher hinterlegt sind.

Es kann möglich sein, dass die wenigstens eine Installationsinformation einen Installations-, und vorzugsweise Ablaufplan der Installation umfasst. Dieser Installations- bzw. Ablaufplan kann aus der Vielzahl der Konstruktionsdaten z. B. aus der Installationsvorgabe und/oder Anlagenspezifikation generiert werden, um dem Benutzer eine geeignete Unterstützung angedeihen zu lassen. Herkömmlicherweise steht einem Benutzer der mechanische und/oder konstruktive Aufbau der Maschine (z. B. Plan der mechanischen Anordnung der Elemente, bzw. des Erscheinungsbildes der Maschine) und der elektrische Plan (Plan der Verkabelung der Komponenten) zur Verfügung. Der Benutzer kann dann anhand dieser Informationen entscheiden, in welcher Weise diese Teilpläne am besten verbunden werden. Der generierte Installationsplan kann hingegen diese Teilpläne automatisch verknüpfen und ggf. auch die Steckverbindung und ggf. den Kabelweg umfassen. Dies kann durch weitere Unterstützungsmaßnahmen begleitet werden, z. B. durch ein Aufleuchten am Verbindungsmodul und/oder durch eine 3D-Anmiation, um dem Benutzer Informationen zur idealen Installation zur Verfügung zu stellen. Wenn alle Informationen enthalten sind, kann der Installationsplan bspw. auf Basis einer I/O-Liste und/oder eines Plans des mechanischen und/oder konstruktiven Aufbaus erzeugt werden. Dazu kann bspw. eine Simulation der Installation und vorzugsweise Verkabelung unter Berücksichtigung bestimmter Optimierungsoptionen (z.B. Wartungsfreundlichkeit) oder Kundenwunschoptimierung (z.B. ästhetische Kundenwünsche) durchgeführt werden. Auch kann ein Algorithmus der künstlichen Intelligenz vorgesehen sein, um die Maschine automatisch abzuscannen und einen geeignete Installationsablauf zu erzeugen.

Um die Installation zu unterstützen, kann vorzugsweise dem Benutzer für jeden Schritt mitgeteilt werden, welches Kabel er zu verwenden hat. Da auf Grund der Anlagenspezifikation und/oder der Installationsvorgabe und/oder des Installationsplans die Anordnung z.B. von zwei baugleichen Sensoren, bekannt ist, diese jedoch anders konfiguriert werden sollen, kann ggf. der Sensor gescannt werden, der über ein Kabel (Leitung / Steckerkombination) mit einem bestimmten Verbindungsmodul verbunden werden soll. Damit ist es möglich das verwendete Kabel "anzulernen" und dies an die Dokumentation zu übergeben. Somit ist eine Auswahl der richtigen Komponenten möglich.

Die Zuordnung kann bspw. eine Zuordnung in einer Topologie der Maschine und/oder eine Zuordnung für eine Verschaltung der Komponenten und/oder Installationselemente miteinander sein. Hierzu können bspw. ein digitalisierter Schaltplan, insbesondere ein Anschlussplan und/oder Betriebsmittelkennzeichnungen, genutzt werden.

Ein Benutzer kann bspw. ein Installateur und/oder Anlagenmechaniker und/oder Elektriker und/oder Werker und/oder Planer und/oder mechanischer Konstrukteur oder Entwickler und/oder elektrischer Konstrukteur oder Entwickler und/oder SPS-Programmierer und/oder Inbetriebnehmer und/oder Instandhalter und/oder Maschinenführer sein. Es ist möglich, dass der Benutzer das erfindungsgemäße Verfahren dadurch verwendet, dass das Verfahren über einen Computer für den Benutzer bereitgestellt wird. Hierzu kann ein Computerprogramm zumindest teilweise durch den Computer und/oder einen weiteren Computer ausgeführt werden, um die erfindungsgemäßen Verfahrensschritte durchzuführen. Ferner ist es möglich, dass mehrere Benutzer simultan oder zumindest teilweise gleichzeitig das erfindungsgemäße Verfahren anwenden. Entsprechend können die Schritte eines erfindungsgemäßen Verfahrens auch mehrfach und/oder zumindest teilweise zeitlich parallel durchgeführt werden. Bspw. werden für mindestens zwei oder mindestens drei oder mindestens vier Benutzer jeweils die Schritte zumindest teilweise gleichzeitig ausgeführt. Für die Installation der Maschine können mehrere Installationselemente vorgesehen sein. Diesen Installationselementen kann jeweils ein Identifikator zugeordnet sein, durch welchen die Installationselemente eindeutig identifiziert werden können. Der Identifikator kann entsprechend eine Information sein, welche bspw. digital verarbeitet werden kann. Das jeweilige Installationselement kann den Identifikator dadurch aufweisen, dass ein physisches Identifikationsmittel am Installationselement vorgesehen und/oder angebracht ist. Die Installationselemente können bspw. Kabel oder Bauteile sein, welche ein funktionaler Teil der Maschine sind. Der Identifikator umfasst vorteilhafterweise eine eindeutige und insbesondere eineindeutige Kennung. Damit ist es möglich, das Installationselement anhand des Identifikators eindeutig im Zusammenhang mit der Maschine und/oder auch weiteren Maschinen und/oder der Installation der Maschine zu identifizieren. Dem Identifikator können eine oder mehrere Informationen über das Installationselement zugewiesen werden. Die wenigstens eine Information kann wenigstens eine der nachfolgenden Informationen umfassen: wenigstens eine Zustandsinformation, die ausgegebene Installationsinformation, eine Kennung der identifizierten Komponente, wenigstens eine der nachfolgend noch näher beschriebenen Dokumentationsspezifikationen. Eine digitale Hinterlegung der wenigstens einen Information zugeordnet zu dem Identifikator ermöglicht es somit, einen digitalen Zwilling des Installationselements zu schaffen. Auf diese Weise kann eine passive Smartifizierung des Installationselements ermöglicht werden. Insbesondere werden über die Installationselemente Geräte der Maschine wie Aktoren und/oder Sensoren betrieben, also vorzugsweise angesteuert und/oder ausgelesen. Für den Betrieb der Geräte kann eine Steuerungsvorrichtung wie eine SPS (Speicherprogrammierbare Steuerung) vorgesehen sein, welche über die Installationselemente und Komponenten den elektrischen Betrieb der Geräte durchführen kann. Hierzu kann die Steuerungsvorrichtung mit den Komponenten in elektrischer Verbindung stehen.

Vorzugsweise kann das Installationselement ein Kabel und/oder ein Bauteil umfassen, wobei das Kabel mindestens oder genau einen Steckverbinder aufweisen kann, und bevorzugt einseitig konfektioniert sein kann, d.h. einseitig einen weiblichen oder männlichen Stecker und an der anderen Seite ein offenes Ende aufweist. Alternativ, kann das Kabel auch zweiseitig konfektioniert sein, d.h. an jeder Seite weist das Kabel einen weiblichen oder männlichen Stecker auf.

Gemäß einer vorteilhaften Weiterbildung der Erfindung kann vorgesehen sein, dass das Erzeugen der wenigstens einen Installationsinformation die nachfolgenden Schritte umfasst:
- Selektieren wenigstens eines der Segmente, insbesondere wenigstens einer Anlagenkomponente der Maschine anhand der Anlagenspezifikation,
- Vergleichen des wenigstens einen selektierten Segments mit wenigstens einem Referenzsegment, insbesondere wenigstens einer Referenzkomponente, der bereitgestellten Installationsreferenz anhand einer vorgegebenen Installationsvorschrift, insbesondere Richtlinie,
- Bereitstellen der wenigstens einen Installationsinformation basierend auf dem Vergleichen.

Dies ermöglicht es, dass installationstechnisch ähnliche Segmente vorteilhafterweise für die zu erzeugende Installationsinformation berücksichtigt werden. Auf diese Weise kann für das umzusetzende Projekt ein geeignetes Segment selektiert werden, z. B. die Belegung einer Schleppkette. Das Selektieren kann z. B. durch eine Selektionseinheit erfolgen. Das Vergleichen kann z. B. durch eine Vergleichseinheit erfolgen, um insbesondre die Ergebnisse der Selektionseinheit mit den in einem Datenspeicher hinterlegten, historischen Projekten bzw. Projektsegmente der Installationsreferenz unter Berücksichtigung der Richtlinien für Installationstätigkeiten zu vergleichen.

In einer weiteren Möglichkeit kann vorgesehen sein, dass das Vergleichen des wenigstens einen selektierten Segments die nachfolgenden Schritte umfasst:
- Analysieren von mehreren Referenzsegmenten der bereitgestellten Installationsreferenz hinsichtlich einer Eignung für das selektierte Segment, wobei die Referenzsegmente jeweils einen Teil, vorzugsweise eine Baugruppe, der Maschine repräsentieren,
- Auswählen eines für das selektierte Segment geeigneten Referenzsegments aus den analysierten Referenzsegmenten basierend auf dem Analysieren,
- Vergleichen des selektierten Segments mit dem ausgewählten Referenzsegment anhand der vorgegebenen Installationsvorschrift.

Dies hat den Vorteil, dass eine schnellere und effizientere Auswahl eines geeigneten Segments unter Berücksichtigung von Installationsvorschriften erfolgen kann. Das Analysieren kann z. B. durch eine erste Analyseeinheit erfolgen, welche vorzugsweise die historischen Projekte bzw. Projektsegmente bezüglich ihrer Tauglichkeit hin überprüft und für jedes Segment des aktuellen Projektes ein passendes historisches Projekt bzw. Projektsegment auswählt. Eine Rekombinationseinheit kann dann ggf. aus den Ergebnissen der Analyseeinheit Vorschriften zur Vorgehensweise und Verkabelung erstellen. Es kann optional eine zweite Analyseeinheit, welche die Unterstützungsmaßnahmen identifiziert, wobei die Unterstützungsmaßnahmen direkt an den Verbindungsmodulen und/oder der Maschine oder im digitalen Zwilling angezeigt werden können. Auch kann eine Steuereinheit vorgesehen sein, um die Unterstützungsmaßnahme auszugeben.

Ferner kann im Rahmen der Erfindung vorgesehen sein, dass das Bereitstellen der wenigstens einen Installationsinformation die nachfolgenden Schritte umfasst:
- Identifizieren von Installationsanweisungen basierend auf dem Vergleichen,
- Analysieren der jeweiligen identifizierten Installationsanweisung hinsichtlich einer Eignung als Installationsanweisung für das selektierte Segment,
- Auswählen wenigstens einer geeigneten Installationsanweisung aus den analysierten Installationsanweisungen basierend auf dem Analysieren.

Damit kann für ein aktuelles Maschinen- und insbesondere Anlagenprojekt segmentweise und auf Basis der Installationsreferenz, vorzugsweise historischer Projektreferenzdaten, ein geeignetes Vorgehen generiert und ggf. Unterstützungsmaßnahmen je nach Maschine entweder direkt an den Komponenten der Maschine oder im digitalen Zwilling angezeigt werden.

Gemäß einem weiteren Vorteil kann vorgesehen sein, dass das Verfahren ferner den folgenden Schritt umfasst: Initiieren einer Ausgabe der ausgewählten Installationsanweisung für den Benutzer. Es kann ferner möglich sein, dass das Initiieren der Ausgabe der ausgewählten Installationsanweisung zumindest einen der nachfolgenden Schritte umfasst:
- Initiieren einer Anzeige der ausgewählten Installationsanweisung auf einer Benutzeroberfläche eines Computers, vorzugsweise eines tragbaren Computers, wobei bevorzugt die Benutzeroberfläche einen digitalen Zwilling zumindest eines Teils der Maschine visualisiert, und besonders bevorzugt einen mechanischen und/oder elektrischen Aufbau und/oder elektrischer Anschlussplan des Teils der Maschine visualisiert,
- Initiieren einer Anzeige der ausgewählten Installationsanweisung an einer Anschlussstelle, insbesondere eines Steckplatzes, der elektrischen Komponente,
- Initiieren einer Ausgabe der ausgewählten Installationsanweisung als eine Anweisung für den Benutzer, das Installationselement an eine bestimmte Anschlussstelle der elektrischen Komponente anzuschließen, wobei vorzugsweise die Anschlussstelle anhand einer elektrischen und/oder mechanischen Installationsvorgabe, insbesondere anhand der ECAD-und/oder MCAD-Daten, ermittelt wird,
- Initiieren einer Anzeige einer Anschlussstelle, insbesondere eines Steckplatzes, der elektrischen Komponente für das Installationselement mittels Erweiterter Realität basierend auf der ausgewählten Installationsanweisung,
- Initiieren einer akustischen Ausgabe, insbesondere einer Sprachausgabe, der ausgewählten Installationsanweisung.

Dies ermöglicht eine unmittelbare Information des Benutzers durch die Installationsanweisung, in welcher Weise das Installationselement installiert werden soll. Bspw. kann durch ein Aufleuchten des Anzeigeelements die Anschlussstelle an der Komponente angezeigt werden, an welcher das Installationselement angeschlossen werden soll. Ferner kann es das Aufleuchten des Anzeigeelements ermöglichen, eine richtig oder falsch zugeordnete Anschlussstelle entsprechend anzuzeigen. Hierzu kann die Komponente mehrere der Anzeigeelemente aufweisen, welche entsprechenden Anschlussstellen der Komponente zugeordnet sind, z. B. durch eine benachbarte Anordnung an einem Anschlusselement.

Es ist ferner möglich, dass ein, insbesondere digitaler, Identifikator eines Installationselements empfangen wird, vorzugsweise von einer Detektionsvorrichtung, welche hierzu zuvor ein physisch vorliegendes Identifikationsmittel wie einen maschinenlesbaren Code eingelesen hat und den Identifikator auf Basis des eingelesenen Identifikationsmittels generiert hat. Ferner kann die Installationsvorgabe eine Zuordnung des Installationselements zur Verbindung mit einer elektrischen Komponente wie einem Verbindungsmodul zur Verbindung mit dem Installationselement und weiteren Installationselementen spezifizieren. Sodann kann die elektrische Komponente anhand der Installationsvorgabe, vorzugsweise durch ein Abfragen der elektrischen Komponente aus der Installationsvorgabe anhand des Identifikators, bevorzugt aus einer Liste und/oder Datenbank der Installationsvorgabe, identifiziert werden. Ferner kann eine Ausgabe wenigstens einer Installationsinformation basierend auf dem empfangenen Identifikator und der identifizierten Komponente initiiert werden, wobei vorzugsweise die Ausgabe eine visuelle und/oder akustische Ausgabe an einen Benutzer umfasst.

Die Anschlussstelle, beispielsweise ein Anschlussport, welche gemäß der Installationsvorgabe für den Anschluss des Installationselements mit dem empfangenen Identifikator vorgesehen ist, kann bspw. über den empfangenen Identifikator aus der Installationsvorgabe abgefragt werden. Hierzu kann die Installationsvorgabe eine elektronische Abfrage ermöglichen, z. B. mittels einer Datenbank und/oder eine Liste und/oder dergleichen.

Die Anzeige der Anschlussstelle auf der Benutzeroberfläche kann bspw. eine grafische Darstellung der Anschlussstellen der Komponente umfassen, wobei die Anschlussstelle, welche für den Anschluss des Installationselements mit dem empfangenen Identifikator vorgesehen ist, grafisch hervorgehoben wird.

Die Benutzeroberfläche kann eine grafische Benutzeroberfläche sein, welche auf einem Bildschirm vorzugsweise eines Computers dargestellt wird. Der Computer kann bspw. ein tragbarer Computer wie ein Laptop oder Tablet sein.

Die Anzeige mittels Erweiterter Realität (engl. Augmented Reality) kann bspw. dadurch erfolgen, dass eine VR (Virtual Reality) Brille durch einen Benutzer verwendet wird, um zusätzliche Informationen anzuzeigen, und/oder dass die Umgebung des Benutzers durch eine Kamera aufzeichnet und das Kamerabild verarbeitet wird, um zusätzliche Informationen in das Kamerabild einzubringen. Die zusätzlichen Informationen umfassen z. B. die Hervorhebung der Anschlussstelle, wenn in dem Kamerabild die physische Anschlussstelle der Komponente zu sehen ist.

Ferner kann auch eine akustische Ausgabe vorgesehen sein, welche z. B. eine Ansteuerung eines Lautsprechers umfasst. Die akustische Ausgabe kann bspw. eine Sprachausgabe sein, durch welche die Anschlussbezeichnung der Anschlussstelle gesprochen wird.

Ein weiterer Vorteil kann im Rahmen der Erfindung erzielt werden, wenn die bereitgestellte Installationsreferenz zumindest teilweise eine oder mehrere der folgenden Referenzdaten umfasst:
- erste Referenzdaten bezüglich einer mechanischen Anordnung einer Referenzanlage, insbesondere MCAD-Daten,
- zweite Referenzdaten bezüglich einer elektrischen Verkabelung einer Referenzanlage, insbesondere ECAD-Daten,
- dritte Referenzdaten, umfassend ein oder mehrere Abbilder, vorzugsweise Scans, einer installierten Maschine oder Anlagekomponenten,
- vierte Referenzdaten, umfassend Anlagenumgebungsdaten.

Diese jeweils bereitgestellten Referenzdaten ermöglichen es, dass eine schnellere Installation gewährleistet wird.Vorteilhafterweise kann im Rahmen der Erfindung vorgesehen sein, dass das Verfahren zumindest einen der folgenden weiteren Schritte umfasst:
- Initiieren einer Speicherung der erzeugten wenigstens einen Installationsinformation als ausgeführte Installation,
- Initiieren einer Speicherung der erzeugten wenigstens einen Installationsinformation als weiteren Teil der bereitgestellten Installationsreferenz.

Dies hat den Vorteil, dass eine Installationsinformation dauerhaft zur Verfügung stehen kann und dass die neu erzeugten Installationsinformationen für weitere Analysen oder Vergleiche bereitgestellt werden können. Bevorzugt kann im Rahmen der Erfindung vorgesehen sein, dass die Anlagenspezifikation eine topologische Anordnung der elektrischen Komponenten umfasst, in welcher die elektrischen Komponenten miteinander verschaltet sind.

Dies ermöglicht es dem Benutzer schneller und einfacher notwendige Installationsinformationen zuzuordnen oder zu finden.

Außerdem kann es im Rahmen der Erfindung von Vorteil sein, dass die bereitgestellte Installationsreferenz wenigstens eine Installationskonfiguration und/oder wenigstens eine Installationsdokumentation umfasst, welche in einem Datenspeicher hinterlegt und/oder an die elektrische Komponente übertragen wird. Alternativ oder zusätzlich ist es möglich, dass die wenigstens eine erzeugte Installationsinformation wenigstens eine Installationskonfiguration und/oder wenigstens eine Installationsdokumentation umfasst, welche in einem Datenspeicher hinterlegt und/oder an die elektrische Komponente übertragen wird. Die Hinterlegung der wenigstens einen Installationsdokumentation kann in den unterschiedlichen Dokumenten, wie beispielsweise dem Schaltplan oder dem Anschlussplan, erfolgen. Dabei kann durch eine Automatisierung der Dokumentation gewährleistet sein, dass die Hinterlegung an der richtigen Stelle erfolgt. Eine den jeweiligen Schritt ausführende Person kann diese Hinterlegungen dann ggf. nur noch quittieren. Die wenigstens eine Installationsdokumentation kann wenigstens eine der nachfolgenden Informationen umfassen: Welches Bauteil wurde verwendet, an welcher Maschine und an welcher Stelle der Maschine wurde das konkrete Bauteil angebracht, von wem wurde es wann angeschlossen, an welchem Port wurde das Kabel angeschlossen, wie wurde es angeschlossen, wurde das Bauteil ordnungsgemäß angeschlossen, gab es Abweichungen zum Plan.

Die Dokumentation kann hierbei auch mit Komponenten und insbesondere Verbindungsmodulen erfolgen, die nicht vorkonfiguriert oder an einer SPS angeschlossen sind. Dadurch werden Fehler vermieden, die durch die Verwendung äußerlich baugleicher, aber unterschiedlich konfigurierter Module entstehen können. Durch die Kommunikationsfähigkeit dieser Verbindungsmodule und durch die Integration sämtlicher Informationen kann das System vorteilhafterweise dazu verwendet werden, den Benutzer bei der Installation der Automatisierungstechnik anzuleiten.

Optional kann das Verfahren vollständig automatisiert ablaufen. Damit können besonders zuverlässig Fehler vermieden werden, die beim manuellen Eintragen von Installationsdokumentationen entstehen können.

Vorteilhaft ist es darüber hinaus, wenn im Rahmen der Erfindung die bereitgestellte Installationsreferenz eine vordefinierte Spezifikation über einen modularen Aufbau der Maschine umfasst, insbesondere über eine Verschaltung der Installationselemente in der Form von Kabeln und/oder Bauteilen mittels der elektrischen Komponente in der Form von Verbindungsmodulen, vorzugsweise umfassend einen Elektro-Anschlussplan.

Es kann von Vorteil sein, wenn im Rahmen der Erfindung ein digitaler Zwilling der Maschine anhand der Anlagenspezifikation generiert und angezeigt wird, wobei die erzeugte wenigstens eine Installationsinformation in dem angezeigten digitalen Zwilling dargestellt wird.

Dies hat den Vorteil, dass der Benutzer die Installationsinformation durch die Anzeige in digitaler Form einfacher und schneller verwenden kann, um die Installation durchzuführen oder den Installationsort zu erkennen.

Ebenfalls Gegenstand der Erfindung ist ein System für eine computer-gestützte Installation von räumlich dezentral angeordneten, elektrischen Komponenten einer Maschine, umfassend eine Vorrichtung zur Datenverarbeitung, umfassend Mittel zur Ausführung der Schritte des erfindungsgemäßen Verfahrens. Ferner kann das System einen Datenspeicher für die Bereitstellung der Installationsreferenz und Anlagenspezifikation umfassen. Damit bringt das erfindungsgemäße System die gleichen Vorteile mit sich, wie sie ausführlich mit Bezug auf ein erfindungsgemäßes Verfahren beschrieben worden sind.

Ebenfalls Gegenstand der Erfindung ist ein Computerprogramm, umfassend Befehle, die bei der Ausführung des Programms durch einen Computer, wie die erfindungsgemäße Vorrichtung zur Datenverarbeitung, diesen veranlassen, die Schritte eines erfindungsgemäßen Verfahrens auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Zudem kann eine Vorrichtung zur Datenverarbeitung, umfassend Mittel zur Ausführung der Schritte eines erfindungsgemäßen Verfahrens, ebenfalls Gegenstand der Erfindung sein. Die Vorrichtung kann dazu fähig sein, mit den Komponenten, insbesondere Modulen der Maschine, insbesondere Anlage, zu kommunizieren.

### Kurzbeschreibung der Zeichnungen

Zum besseren Verständnis der Offenbarung wird auf die folgenden Zeichnungen verwiesen:
- Fig. 1:: Eine zentrale Verschaltung bei einer Maschine mittels eines Schaltschranks.
- Fig. 2:: Eine dezentrale Verschaltung gemäß Ausführungsbeispielen der Erfindung.
- Fig. 3: Eine schematische Darstellung von Teilen eines Systems gemäß Ausführungsbeispielen der Erfindung.
- Fig. 4: Eine schematische Darstellung von Einzelheiten eines Verfahrens gemäß Ausführungsbeispielen der Erfindung.
- Fig. 5: Eine schematische Darstellung von Schritten eines Verfahrens gemäß Ausführungsbeispielen der Erfindung.

### Beschreibung der Ausführungsbeispiele

Das Planen, Installieren und Einrichten von Maschinen sowie elektronischer Automatisierungstechnik ist eine komplexe Aufgabe. Dies gilt für zentralisierte Schaltschrank-Systeme ebenso, wie für dezentralisierte Systeme, in denen Steuerungsmodule direkt an den Anlagen angebracht werden. Die entsprechenden Prozesse werden von unterschiedlichen Personen, wie Anlagen-Planer, Elektro-Planer, Installateur, Anlagenprogrammierer etc. durchgeführt. Eine Besonderheit bei dezentralen Systemen ist die Verteilung der Module an verschiedenen Stellen einer Maschine im Vergleich zu den zentralisierten Schaltschrank-Systemen. Gerade bei größeren Maschinen kann eine simultane, das heißt zeitgleich parallel durch mehrere Benutzer ausgeführte Installation aus zeitlichen und logistischen Gründen vorteilhaft sein. Um einen reibungslosen Installationsprozess zu ermöglichen, soll der Arbeitsstand automatisch, benutzerindividuell und in Echtzeit digital dokumentiert werden. Über den ganzen Anlagen-Lebenszyklus ist es aus unterschiedlichen Gründen (wie z.B. Wartungsplanung, Systemdiagnosen) wichtig, über eine vollständige Dokumentation aller relevanten Informationen zu verfügen.

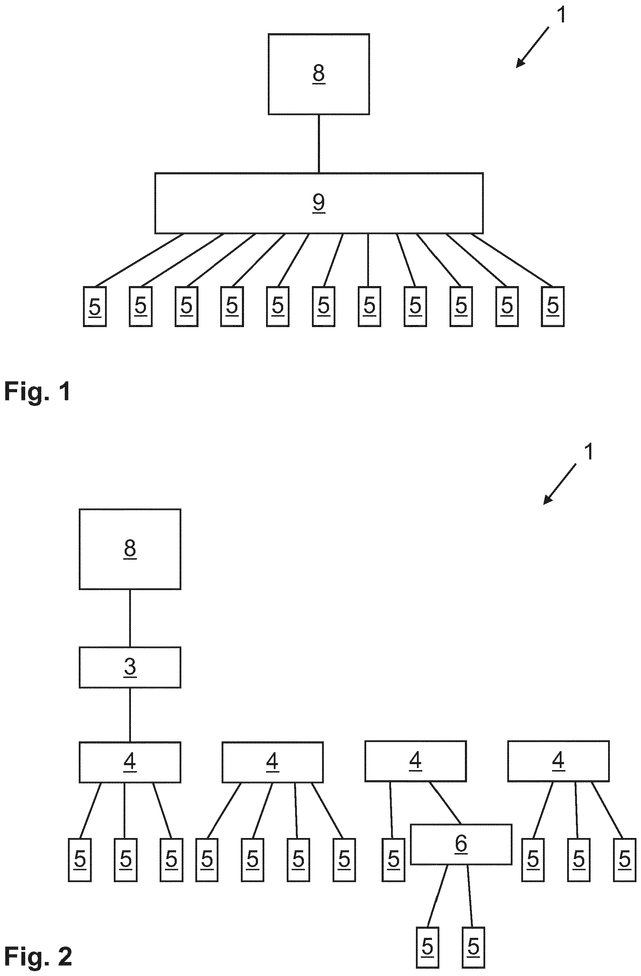

In Fig. 1 ist schematisch eine zentrale Verschaltung mittels eines Schaltschranks 9 dargestellt, um diese einer dezentralen Verschaltung mittels räumlich dezentral angeordneten, elektrischen Komponenten 4 einer Maschine 1 in Fig. 2 gegenüberzustellen. Anstelle einer Verbindung sämtlicher Geräte 5 wie Sensoren und Aktoren unmittelbar mit dem Schaltschrank 9 wie in Fig. 1 dargestellt, können bei der dezentralen Verschaltung in Fig. 2 mehrere Komponenten 4, also insbesondere Verbindungsmodule, eingesetzt werden. Diese ermöglichen, wie der Schaltschrank 9, eine Kopplung der Geräte 5 mit einer Steuerungsvorrichtung 8 wie einer SPS. Allerdings können die Verbindungsmodule 4 dezentral und verteilt in der Nähe zu den Geräte 5 vorgesehen sein. Die Verbindungsmodule 4 verschalten somit jeweils die Geräte 5 nur teilweise, wobei die Verbindungsmodule 4 zusammen oder beispielsweise ein und/oder mehrere Verbindungsmodule 4 über jeweils einen und/oder mehrere Hubs 6 die gesamte Verschaltung vornehmen. Um die Konfiguration und/oder Ansteuerung der Verbindungsmodule 4 zentral zu ermöglichen, kann ein Mastermodul 3 mehreren der einzelnen Verbindungsmodulen 4 vorgeschaltet sein. Ebenfalls ist es möglich, dass eine weitere Untergliederung der Verschaltung mittels wenigstens eines Hubs 6 erfolgt.

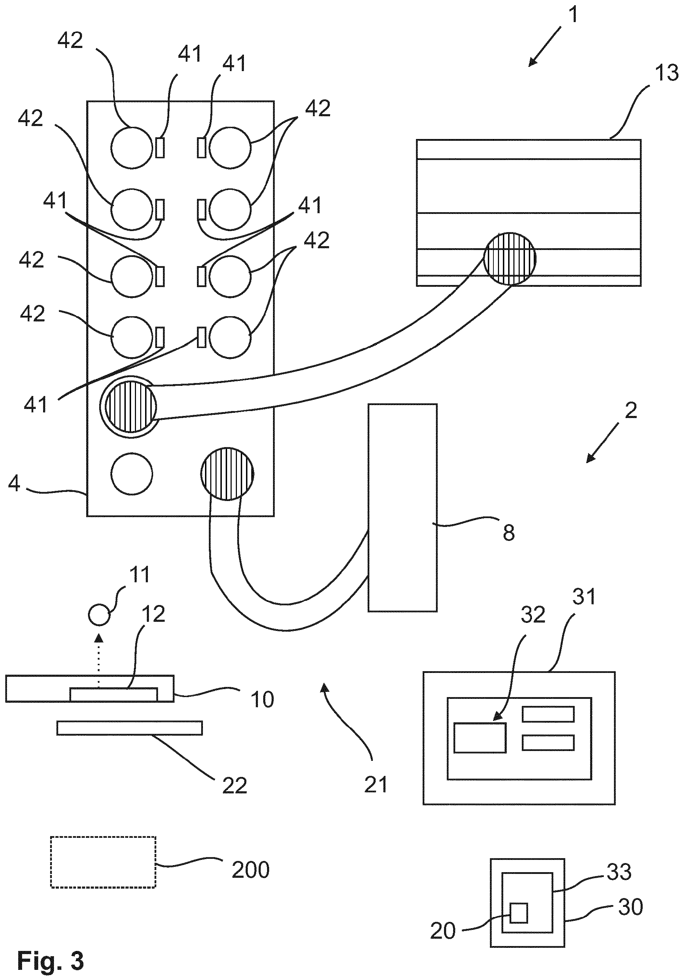

In Fig. 3 sind Teile eines Systems 2 gemäß Ausführungsbeispielen der Erfindung dargestellt, welches für eine computer-gestützte Installation von räumlich dezentral angeordneten elektrischen Komponenten 4 einer Maschine 1 vorgesehen sein kann. Das System 2 kann eine Detektionsvorrichtung 22, insbesondere einen Scanner 22 oder eine Kamera 22, für eine Bereitstellung eines Identifikators 11 eines Installationselements 10, vorzugsweise eines Kabels 11 oder eines Bauteils 11, umfassen. Ferner kann das System 2 wenigstens eine elektrische Komponente 4, vorzugsweise in der Form eines Verbindungsmoduls 4 zur Verbindung mit dem Installationselement 10 und weiteren Installationselementen 10, aufweisen. Ebenfalls kann eine Vorrichtung 30 zur Datenverarbeitung Teil des Systems 2 sein, wobei diese Datenverarbeitungsvorrichtung 30 Mittel zur Ausführung der Schritte eines Verfahren 100 gemäß Ausführungsbeispielen der Erfindung umfassen kann.

Der Identifikator 11 kann in einem dem Installationselement 10 zugeordneten, insbesondere an diesem angeordneten, maschinenlesbaren Code 12 kodiert sein, wobei der maschinenlesbare Code 12 mittels der Detektionsvorrichtung 22 maschinenlesbar ausgeführt ist. Damit ist es für einen Benutzer möglich, mittels der Detektionsvorrichtung 22 den Code 12 einzuscannen und somit den Identifikator 11 an die Datenverarbeitungsvorrichtung 30 zu übertragen.

Ferner können die Komponenten 4 und wenigstens ein Computer 30, 31 und/oder eine Steuerungsvorrichtung 8 über ein Bussystem 21 jeweils zur bidirektionalen Kommunikation miteinander verbunden sein, wobei die bidirektionale Kommunikation auf Basis eines Kommunikationsprotokolls für ein Feldbussystem vorgesehen sein kann, insbesondere auf Basis eines ProfiNet-, Ethernet/IP- oder 802.3-Standards, und/oder die bidirektionale Kommunikation kabelgebunden über ein Bussystem 21 oder kabellos mittels Bluetooth oder WLAN, auf Basis eines Standards gemäß IEEE 802.11 oder auf Basis eines Mobilfunk-Telekommunikationsstandards vorgesehen sein kann. Um einen Betrieb der Komponente 4 zu ermöglichen, kann die Komponente 4 ferner mit einer Energieversorgung 13 verbunden sein.

Ferner ist ein Computerprogramm 20 dargestellt, welches Befehle umfasst, die bei der Ausführung des Programms durch einen Computer 30 diesen veranlassen, die Schritte des Verfahrens 100 gemäß Ausführungsbeispielen der Erfindung auszuführen.

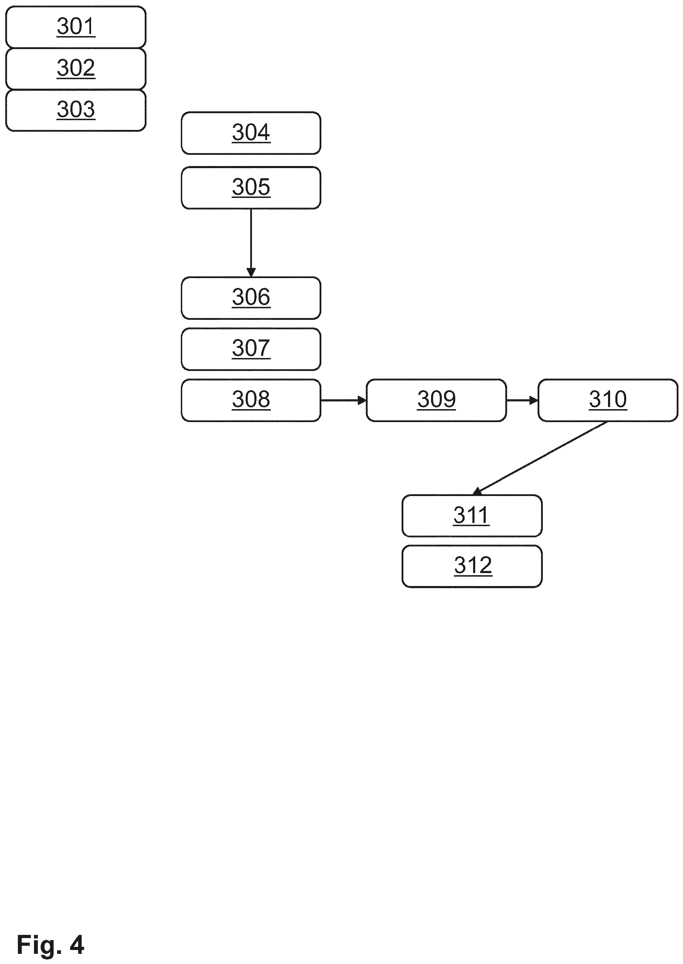

In Fig. 4 ist ein Verfahren 100 gemäß Ausführungsbeispielen der Erfindung mit weiteren Einzelheiten visualisiert. Über einen in Fig. 3 dargestellten Computer 31, wie ein Tablet oder Laptop, kann ein Benutzer zunächst eine Nutzeranmeldung 301 durchführen. Hierzu kann der Nutzer eine grafische Benutzeroberfläche 32 nutzen, welche durch den Computer 31 bereitgestellt wird. Ebenfalls über die Benutzeroberfläche 32 kann eine Projektauswahl 302 erfolgen, durch welche bspw. eine Installationsvorgabe 200 für ein gewünschtes Projekt geladen wird. Damit ist es möglich, einen Beginn 303 für eine Anleitung des Benutzers zur Installation der Maschine 1 mittels wenigstens einer Installationsanweisung einzuleiten.

Optional kann nach dem Beginn 303 zunächst eine Darstellung 304 des letzten ausgeführten Schrittes erfolgen, bspw. der letzten Installationsanweisung und/oder einer anderen Anweisung für die Installation. Zunächst kann eine Identifikation 305 eines Installationselements 10 durch den Benutzer erfolgen, wobei der Benutzer hierzu bspw. eine Detektionsvorrichtung 22 wie einen Handscanner zum Scannen eines Identifikationsmittels 12 am Installationselement 10 nutzt. Anhand des gescannten Identifikationsmittels 12 kann dann der Identifikator 11 ermittelt werden und an den Computer 31 und/oder eine Vorrichtung 30 zur Datenverarbeitung übertragen werden. Anhand des empfangenen Identifikators 11 und der Installationsvorgabe 200 kann dann die elektrische Komponente 4 und ihre Anschlussstelle 42 identifiziert werden, an welcher das Installationselement 10 angeschlossen werden soll. Hierzu umfasst die Installationsvorgabe 200 bspw. eine Matrix, in welcher verschiedene Installationselemente 10 den Komponenten 4 zugeordnet werden. Sodann kann dem Benutzer durch die Installationsanweisung mitgeteilt werden, welche der Komponenten 4 hierbei identifiziert wurde. Hierzu leuchtet bspw. ein Anzeigeelemente 41 an der Komponente 4 auf. Dies kann durch eine Signalübertragung 306 von der Datenverarbeitungsvorrichtung 30 an Komponente 4 ermöglicht werden. Anschließend kann durch den Benutzer eine Verbindung 307 zwischen dem Installationselement 10 und der Komponente hergestellt werden. Anhand der Installationsvorgabe 200 kann eine Bestätigung 308 der korrekten Montage erfolgen. Anschließend ist ggf. eine zumindest teilweise automatisierte Dokumentation 309 der korrekten Montage und Dokumentation 310 der Erledigung des Arbeitsschritts in der Installationsvorgabe 200 möglich. Dies kann z. B. durch eine Darstellung 311 in einer Maschinenübersicht mit einem grünen Haken oder z.B. durch ein Einblenden der betroffenen Verbindung in einem Schaltplan erfolgen und dem Benutzer über die Benutzeroberfläche 32 dargestellt werden. Anschließend kann erneut eine Identifikation eines Installationselements 312 durchgeführt werden. Durch die Anleitung des Benutzers, insbesondere Werkers bei der Installation der elektrischen Automatisierungstechnik und durch die automatisierte Prüfung, ob ein geeignetes Bauteil ordnungsgemäß angeschlossen wurde, kann eine fehlerfreie Herstellung des Systems sichergestellt werden.

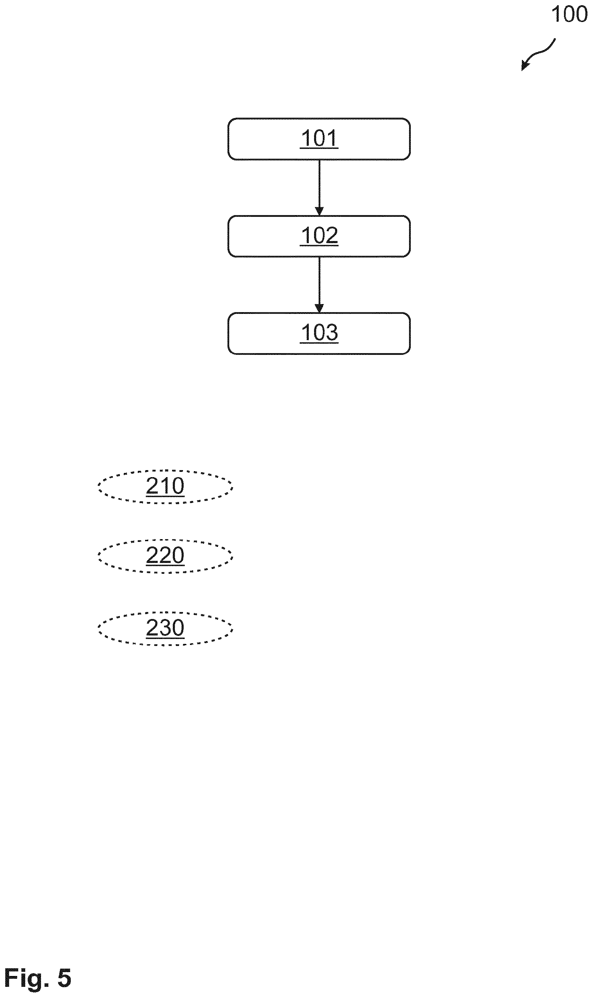

In Fig. 5 ist ein Ausführungsbeispiel eines erfindungsgemäßen Verfahrens 100 für eine computer-gestützte Installation von räumlich dezentral angeordneten, elektrischen Komponenten 4 einer Maschine 1, insbesondere einer Anlage 1, visualisiert.

Gemäß einem ersten Verfahrensschritt 101 erfolgt hierbei ein Bereitstellen einer Installationsreferenz 210, insbesondere einer historischen Installation, welche eine Zuordnung wenigstens eines Installationselements 10, vorzugsweise eines Kabels und/oder eines Bauteils, und wenigstens einer elektrischen Komponente 4, vorzugsweise in der Form eines Verbindungsmoduls 4 zur Verbindung mit dem Installationselement 10 und weiteren Installationselementen 10, für die Installation spezifiziert.

Anschließend kann gemäß einem zweiten Verfahrensschritt 102 ein Bereitstellen einer Anlagenspezifikation 220 vorgesehen sein, welche für Segmente der Maschine 1 spezifisch ist. Sodann kann gemäß einem dritten Verfahrensschritt 103 ein Erzeugen wenigstens einer Installationsinformation 230 zur Unterstützung eines Benutzers, insbesondere Werkers oder Planers oder Installateurs, für die Installation basierend auf der bereitgestellten Installationsreferenz 210 und der bereitgestellten Anlagenspezifikation 220 vorgesehen sein.

Darüber hinaus kann das Erzeugen 103 der wenigstens einen Installationsinformation 230 ein Selektieren wenigstens eines der Segmente, insbesondere wenigstens einer Anlagenkomponente der Maschine anhand der Anlagenspezifikation 220 sowie ein Vergleichen des wenigstens einen selektierten Segments mit wenigstens einem Referenzsegment der bereitgestellten Installationsreferenz 210 anhand einer vorgegebenen Installationsvorschrift umfassen. Anschließend kann der wenigstens einen Installationsinformation 230 basierend auf dem Vergleichen bereitgestellt werden.

Das Vergleichen des wenigstens einen selektierten Segments kann ein Analysieren von mehreren Referenzsegmenten der bereitgestellten Installationsreferenz 210 hinsichtlich einer Eignung für das selektierte Segment umfassen, wobei die Referenzsegmente jeweils einen Teil, vorzugsweise eine Baugruppe, der Maschine 1 repräsentieren. Anschließend kann eines für das selektierte Segment geeigneten Referenzsegments aus den analysierten Referenzsegmenten basierend auf dem Analysieren ausgewählt und das selektierte Segment mit dem ausgewählten Referenzsegment anhand der vorgegebenen Installationsvorschrift verglichen werden.

Für das Bereitstellen der wenigstens einen Installationsinformation 230 kann ein Identifizieren von Installationsanweisungen basierend auf dem Vergleichen sowie ein Analysieren der jeweiligen identifizierten Installationsanweisung hinsichtlich einer Eignung als Installationsanweisung für das selektierte Segment und ein Auswählen wenigstens einer geeigneten Installationsanweisung aus den analysierten Installationsanweisungen basierend auf dem Analysieren durchgeführt werden.

Ferner kann bei dem Verfahren 100 ein Initiieren einer Ausgabe der ausgewählten Installationsanweisung für den Benutzer vorgesehen sein. Das Initiieren der Ausgabe der ausgewählten Installationsanweisung kann ein Initiieren einer Anzeige der ausgewählten Installationsanweisung auf einer in Fig. 3 dargestellten Benutzeroberfläche 32 eines Computers 31, vorzugsweise eines tragbaren Computers 31, umfassen, wobei bevorzugt die Benutzeroberfläche 32 einen digitalen Zwilling zumindest eines Teils der Maschine 1 visualisiert, und besonders bevorzugt einen mechanischen und/oder elektrischen Aufbau und/oder elektrischer Anschlussplan des Teils der Maschine 1 visualisiert. Darüber hinaus kann ein Initiieren einer Anzeige der ausgewählten Installationsanweisung an einer in Fig. 3 gezeigten Anschlussstelle 42, insbesondere eines Steckplatzes 42, der elektrischen Komponente 4, vorgesehen sein. Auch ist ein Initiieren einer Ausgabe der ausgewählten Installationsanweisung als eine Anweisung für den Benutzer möglich, um den Benutzer anzuweisen, das Installationselement 10 an eine bestimmte Anschlussstelle 42 der elektrischen Komponente 4 anzuschließen.

Die bereitgestellte Installationsreferenz 210 kann ferner zumindest teilweise eine oder mehrere der folgenden Referenzdaten umfasst: erste Referenzdaten bezüglich einer mechanischen Anordnung einer Referenzanlage, insbesondere MCAD-Daten, zweite Referenzdaten bezüglich einer elektrischen Verkabelung einer Referenzanlage, insbesondere ECAD-Daten, dritte Referenzdaten, umfassend ein oder mehrere Abbilder, vorzugsweise Scans, einer installierten Maschine 1 oder Anlagekomponenten und vierte Referenzdaten, umfassend Anlagenumgebungsdaten.

Ferner kann die bereitgestellte Installationsreferenz 210 eine Installationskonfiguration und/oder eine Installationsdokumentation umfasst, welche in einem in Fig. 3 gezeigten Datenspeicher 33 hinterlegt und/oder an die elektrische Komponente 4 übertragen wird. Die bereitgestellte Installationsreferenz 210 kann eine vordefinierte Spezifikation über einen modularen Aufbau der Maschine 1 umfassen, insbesondere über eine Verschaltung der Installationselemente 10 in der Form von Kabeln und/oder Bauteilen mittels der elektrischen Komponente 4 in der Form von Verbindungsmodulen 4, vorzugsweise umfassend einen Elektro-Anschlussplan.

In Fig. 3 ist außerdem ein System 2 für eine computer-gestützte Installation von räumlich dezentral angeordneten, elektrischen Komponenten 4 einer Maschine 1 visualisiert, umfassend eine Vorrichtung 30 zur Datenverarbeitung, umfassend Mittel zur Ausführung der Schritte eines Verfahrens 100 gemäß Ausführungsbeispielen der Erfindung. Ebenfalls gezeigt ist ein Datenspeicher 33 für die Bereitstellung der Installationsreferenz 210 und Anlagenspezifikation 220. Ein Computerprogramm 20 kann ferner vorgesehen sein, welches Befehle umfasst, die bei der Ausführung des Computerprogramms 20 durch einen Computer 30 diesen veranlassen, die Schritte des Verfahrens 100 auszuführen.

Obwohl einige Aspekte im Zusammenhang mit einer Vorrichtung beschrieben wurden, ist es klar, dass diese Aspekte auch eine Beschreibung des entsprechenden Verfahrens darstellen, wobei ein Element oder eine Vorrichtung einem Verfahrensschritt oder einem Merkmal eines Verfahrensschritts entspricht. Analog dazu stellen Aspekte, die im Zusammenhang mit einem Verfahrensschritt beschrieben werden, auch eine Beschreibung eines entsprechenden Blocks oder Elements oder Merkmals eines entsprechenden Geräts dar.

Ausführungsformen der Erfindung können auf einem Computersystem implementiert werden. Bei dem Computersystem kann es sich um ein lokales Computergerät (z. B. Personalcomputer, Laptop, Tablet-Computer oder Mobiltelefon) mit einem oder mehreren Prozessoren und einem oder mehreren Speichergeräten handeln oder um ein verteiltes Computersystem (z. B. ein Cloud-Computersystem mit einem oder mehreren Prozessoren und einem oder mehreren Speichergeräten, die an verschiedenen Orten verteilt sind, z. B. bei einem lokalen Client und/oder einer oder mehreren entfernten Serverfarmen und/oder Datenzentren). Das Computersystem kann jede beliebige Schaltung oder Kombination von Schaltungen umfassen. In einer Ausführungsform kann das Computersystem einen oder mehrere Prozessoren beliebiger Art umfassen. Der hier verwendete Begriff "Prozessor" kann jede Art von Rechenschaltung bezeichnen, z. B. einen Mikroprozessor, einen Mikrocontroller, einen CISC-Mikroprozessor (Complex Instruction Set Computing), einen RISC-Mikroprozessor (Reduced Instruction Set Computing), einen VLIW-Mikroprozessor (Very Long Instruction Word), einen Grafikprozessor, einen digitalen Signalprozessor (DSP), einen Mehrkernprozessor, ein FPGA (Field Programmable Gate Array) oder jede andere Art von Prozessor oder Verarbeitungsschaltung. Andere Arten von Schaltkreisen, die im Computersystem enthalten sein können, können ein kundenspezifischer Schaltkreis, ein anwendungsspezifischer integrierter Schaltkreis (ASIC) oder ähnliches sein, wie z. B. ein oder mehrere Schaltkreise (z. B. ein Kommunikationsschaltkreis) zur Verwendung in drahtlosen Geräten wie Mobiltelefonen, Tablet-Computern, Laptop-Computern, Zwei-Wege-Funkgeräten und ähnlichen elektronischen Systemen. Das Computersystem kann eine oder mehrere Speichervorrichtungen enthalten, die ein oder mehrere für die jeweilige Anwendung geeignete Speicherelemente umfassen können, wie z. B. einen Hauptspeicher in Form eines Direktzugriffsspeichers (RAM), eine oder mehrere Festplatten und/oder ein oder mehrere Laufwerke, die Wechseldatenträger wie Compact Disks (CD), Flash-Speicherkarten, digitale Videodisks (DVD) und dergleichen verarbeiten. Das Computersystem kann auch ein Anzeigegerät, einen oder mehrere Lautsprecher und eine Tastatur und/oder ein Steuergerät enthalten, das eine Maus, einen Trackball, einen Touchscreen, ein Spracherkennungsgerät oder ein anderes Gerät umfassen kann, das es einem Systembenutzer ermöglicht, Informationen in das Computersystem einzugeben und Informationen von ihm zu empfangen.

Einige oder alle Verfahrensschritte können von einem Hardware-Gerät (oder unter Verwendung eines solchen) ausgeführt werden, wie z. B. einem Prozessor, einem Mikroprozessor, einem programmierbaren Computer oder einer elektronischen Schaltung. In einigen Ausführungsformen können einige oder mehrere der wichtigsten Verfahrensschritte von einem solchen Gerät ausgeführt werden.

Abhängig von bestimmten Implementierungsanforderungen können Ausführungsformen der Erfindung in Hardware oder in Software implementiert werden. Die Implementierung kann unter Verwendung eines nicht-übertragbaren Speichermediums wie eines digitalen Speichermediums, beispielsweise einer Diskette, einer DVD, einer Blu-Ray, einer CD, eines ROM, eines PROM, eines EPROM, eines EEPROM oder eines FLASH-Speichers erfolgen, auf dem elektronisch lesbare Steuersignale gespeichert sind, die mit einem programmierbaren Computersystem zusammenwirken (oder zusammenwirken können), so dass das jeweilige Verfahren durchgeführt wird. Daher kann das digitale Speichermedium computerlesbar sein.

Einige Ausführungsformen der Erfindung umfassen einen Datenträger mit elektronisch lesbaren Steuersignalen, die in der Lage sind, mit einem programmierbaren Computersystem zusammenzuarbeiten, so dass eines der hier beschriebenen Verfahren durchgeführt wird.

Im Allgemeinen können Ausführungsformen der vorliegenden Erfindung als Computerprogrammprodukt mit einem Programmcode implementiert werden, wobei der Programmcode zur Durchführung eines der Verfahren dient, wenn das Computerprogrammprodukt auf einem Computer läuft. Der Programmcode kann zum Beispiel auf einem maschinenlesbaren Träger gespeichert sein.

Andere Ausführungsformen umfassen das Computerprogramm zur Durchführung eines der hier beschriebenen Verfahren, das auf einem maschinenlesbaren Träger gespeichert ist.

Mit anderen Worten, eine Ausführungsform der vorliegenden Erfindung ist daher ein Computerprogramm mit einem Programmcode zur Durchführung eines der hierin beschriebenen Verfahren, wenn das Computerprogramm auf einem Computer läuft.

Eine weitere Ausführungsform der vorliegenden Erfindung ist daher ein Speichermedium (oder ein Datenträger oder ein computerlesbares Medium), auf dem das Computerprogramm zur Durchführung eines der hierin beschriebenen Verfahren gespeichert ist, wenn es von einem Prozessor ausgeführt wird. Der Datenträger, das digitale Speichermedium oder das aufgezeichnete Medium sind typischerweise greifbar und/oder nicht-übertragbar. Eine weitere Ausführungsform der vorliegenden Erfindung ist ein Gerät, wie hierin beschrieben, mit einem Prozessor und dem Speichermedium.

Eine weitere Ausführungsform der Erfindung ist daher ein Datenstrom oder eine Folge von Signalen, die das Computerprogramm zur Durchführung eines der hierin beschriebenen Verfahren darstellen. Der Datenstrom bzw. die Signalfolge kann beispielsweise so ausgestaltet sein, dass er bzw. sie über eine Datenkommunikationsverbindung, z.B. über das Internet, übertragen werden kann.

Eine weitere Ausführungsform umfasst ein Verarbeitungsmittel, z. B. einen Computer oder ein programmierbares Logikgerät, das so konfiguriert oder angepasst ist, dass es eines der hierin beschriebenen Verfahren durchführen kann.

Eine weitere Ausführungsform umfasst einen Computer, auf dem das Computerprogramm zur Durchführung eines der hierin beschriebenen Verfahren installiert ist.

Eine weitere Ausführungsform der Erfindung umfasst eine Vorrichtung oder ein System, die bzw. das so konfiguriert ist, dass sie bzw. es ein Computerprogramm zur Durchführung eines der hierin beschriebenen Verfahren an einen Empfänger überträgt (z. B. auf elektronischem oder optischem Weg). Bei dem Empfänger kann es sich beispielsweise um einen Computer, ein mobiles Gerät, ein Speichergerät oder dergleichen handeln. Die Vorrichtung oder das System kann zum Beispiel einen Dateiserver zur Übertragung des Computerprogramms an den Empfänger umfassen.

In einigen Ausführungsformen kann eine programmierbare Logikvorrichtung (z. B. ein feldprogrammierbares Gate-Array) verwendet werden, um einige oder alle Funktionen der hier beschriebenen Verfahren auszuführen. In einigen Ausführungsformen kann ein feldprogrammierbares Gate-Array mit einem Mikroprozessor zusammenarbeiten, um eines der hier beschriebenen Verfahren durchzuführen. Im Allgemeinen werden die Verfahren vorzugsweise von einem beliebigen Hardware-Gerät durchgeführt.

### Liste der Bezugszeichen

- 1: Maschine, Anlage
- 2: System
- 3: Mastermodul
- 4: Modul, Komponente, Verbindungsmodul
- 5: Geräte, Sensor, Aktor
- 6: Hub
- 8: Steuerungsvorrichtung, SPS
- 9: Schaltschrank

- 10: Installationselement
- 11: Identifikator
- 12: Identifikationsmittel, maschinenlesbarer Code
- 13: Energieversorgung

- 20: Computerprogramm
- 21: Bussystem
- 22: Detektionsvorrichtung

- 30: Vorrichtung
- 31: Computer
- 32: Benutzeroberfläche
- 33: Datenspeicher

- 41: Anzeigeelement
- 42: Anschlussstelle, Steckplatz

- 100: Verfahren
- 101: erster Verfahrensschritt
- 102: zweiter Verfahrensschritt
- 103: dritter Verfahrensschritt

- 200: Installationsvorgabe
- 210: Installationsreferenz
- 220: Anlagenspezifikation
- 230: Installationsinformation
- 301: Nutzeranmeldung
- 302: Projektauswahl
- 303: Beginn Anleitung
- 304: Darstellung letzter ausgeführter Schritt
- 305: Identifikation eines Installationselements, insbesondere Kabels
- 306: Signal an Komponente zum Aufleuchten des Anzeigeelements
- 307: Verbindung zwischen Kabel und Modul hergestellt
- 308: Bestätigung korrekte Montage
- 309: Dokumentation korrekte Montage
- 310: Dokumentation Arbeitsschritt erledigt
- 311: Darstellung Maschinenübersicht
- 312: Identifikation eines Installationselements

## Patentansprüche

1. Ein Verfahren (100) für eine computer-gestützte Installation von räumlich dezentral angeordneten, elektrischen Komponenten (4) einer Maschine (1), umfassend:
Bereitstellen (101) einer Installationsreferenz (210), welche eine Zuordnung wenigstens eines Installationselements (10) und wenigstens einer elektrischen Komponente (4), in der Form eines Verbindungsmoduls (4) zur Verbindung mit dem Installationselement (10) und weiteren Installationselementen (10), für die Installation spezifiziert;
Bereitstellen (102) einer Anlagenspezifikation (220), welche für Segmente der Maschine (1) spezifisch ist; und
Erzeugen (103) wenigstens einer Installationsinformation (230) zur Unterstützung eines Benutzers für die Installation basierend auf der bereitgestellten Installationsreferenz (210) und der bereitgestellten Anlagenspezifikation (220),
wobei das Erzeugen (103) der wenigstens einen Installationsinformation (230) die nachfolgenden Schritte umfasst, um installationstechnisch ähnliche Segmente für die zu erzeugende Installationsinformation zu berücksichtigen:
Selektieren wenigstens eines der Segmente;
Vergleichen des wenigstens einen selektierten Segments mit wenigstens einem Referenzsegment der bereitgestellten Installationsreferenz (210) anhand einer vorgegebenen Installationsvorschrift; und
Bereitstellen der wenigstens einen Installationsinformation (230) basierend auf dem Vergleichen, wobei
die wenigstens eine Installationsinformation (230) wenigstens eine maschinenindividuelle Installationsanweisung auf Basis der Installationsreferenz (210) umfasst.

2. Das Verfahren (100) nach Anspruch 1, wobei das Selektieren des wenigstens einen der Segmente umfasst:
Selektieren wenigstens einer Anlagenkomponente der Maschine anhand der Anlagenspezifikation (220);
und dass das Vergleichen des wenigstens einen selektierten Segments mit dem wenigstens einen Referenzsegment umfasst:
Vergleichen des wenigstens einen selektierten Segments mit dem wenigstens einen Referenzsegment in der Form wenigstens einer Referenzkomponente der bereitgestellten Installationsreferenz (210) anhand der vorgegebenen Installationsvorschrift in der Form einer Richtlinie.

3. Das Verfahren (100) nach Anspruch 2, wobei das Vergleichen des wenigstens einen selektierten Segments die nachfolgenden Schritte umfasst:
Analysieren von mehreren Referenzsegmenten der bereitgestellten Installationsreferenz (210) hinsichtlich einer Eignung für das selektierte Segment, wobei die Referenzsegmente jeweils einen Teil, vorzugsweise eine Baugruppe, der Maschine (1) repräsentieren;
Auswählen eines für das selektierte Segment geeigneten Referenzsegments aus den analysierten Referenzsegmenten basierend auf dem Analysieren; und
Vergleichen des selektierten Segments mit dem ausgewählten Referenzsegment anhand der vorgegebenen Installationsvorschrift.

4. Das Verfahren (100) nach Anspruch 2 oder 3, wobei das Bereitstellen der wenigstens einen Installationsinformation (230) die nachfolgenden Schritte umfasst:
Identifizieren von Installationsanweisungen basierend auf dem Vergleichen;
Analysieren der jeweiligen identifizierten Installationsanweisung hinsichtlich einer Eignung als Installationsanweisung für das selektierte Segment; und
Auswählen wenigstens einer geeigneten Installationsanweisung aus den analysierten Installationsanweisungen basierend auf dem Analysieren.

5. Das Verfahren (100) nach Anspruch 4, wobei das Verfahren (100) ferner den folgenden Schritt umfasst:
Initiieren einer Ausgabe der ausgewählten Installationsanweisung für den Benutzer.

6. Das Verfahren (100) nach Anspruch 5, wobei das Initiieren der Ausgabe der ausgewählten Installationsanweisung zumindest einen der nachfolgenden Schritte umfasst:
Initiieren einer Anzeige der ausgewählten Installationsanweisung auf einer Benutzeroberfläche (32) eines Computers (31), vorzugsweise eines tragbaren Computers (31), wobei bevorzugt die Benutzeroberfläche (32) einen digitalen Zwilling zumindest eines Teils der Maschine (1) visualisiert, und besonders bevorzugt einen mechanischen und/oder elektrischen Aufbau und/oder elektrischer Anschlussplan des Teils der Maschine (1) visualisiert;
Initiieren einer Anzeige der ausgewählten Installationsanweisung an einer Anschlussstelle (42), insbesondere eines Steckplatzes (42), der elektrischen Komponente (4);
Initiieren einer Ausgabe der ausgewählten Installationsanweisung als eine Anweisung für den Benutzer, das Installationselement (10) an eine bestimmte Anschlussstelle (42) der elektrischen Komponente (4) anzuschließen, wobei vorzugsweise die Anschlussstelle (42) anhand einer elektrischen und/oder mechanischen Installationsvorgabe (200), insbesondere anhand der ECAD- und/oder MCAD-Daten, ermittelt wird;
Initiieren einer Anzeige einer Anschlussstelle (42), insbesondere eines Steckplatzes (42), der elektrischen Komponente (4) für das Installationselement (10) mittels Erweiterter Realität basierend auf der ausgewählten Installationsanweisung; und
Initiieren einer akustischen Ausgabe, insbesondere einer Sprachausgabe, der ausgewählten Installationsanweisung.

7. Das Verfahren (100) nach einem der vorhergehenden Ansprüche, wobei die bereitgestellte Installationsreferenz (210) zumindest teilweise eine oder mehrere der folgenden Referenzdaten umfasst:
erste Referenzdaten bezüglich einer mechanischen Anordnung einer Referenzanlage, insbesondere MCAD-Daten;
zweite Referenzdaten bezüglich einer elektrischen Verkabelung einer Referenzanlage, insbesondere ECAD-Daten;
dritte Referenzdaten, umfassend ein oder mehrere Abbilder, vorzugsweise Scans, einer installierten Maschine (1) oder Anlagekomponenten; und
vierte Referenzdaten, umfassend Anlagenumgebungsdaten.

8. Das Verfahren (100) nach einem der vorhergehenden Ansprüche, wobei das Verfahren (100) zumindest einen der folgenden weiteren Schritte umfasst:
Initiieren einer Speicherung der erzeugten wenigstens einen Installationsinformation (230) als ausgeführte Installation;
Initiieren einer Speicherung der erzeugten wenigstens einen Installationsinformation (230) als weiteren Teil der bereitgestellten Installationsreferenz (210).

9. Das Verfahren (100) nach einem der vorhergehenden Ansprüche, wobei die Anlagenspezifikation (220) eine topologische Anordnung der elektrischen Komponenten (4) umfasst, in welcher die elektrischen Komponenten miteinander verschaltet sind.

10. Das Verfahren (100) nach einem der vorhergehenden Ansprüche, wobei die bereitgestellte Installationsreferenz (210) eine Installationskonfiguration und/oder eine Installationsdokumentation umfasst, welche in einem Datenspeicher (33) hinterlegt und/oder an die elektrische Komponente (4) übertragen wird.

11. Das Verfahren (100) nach einem der vorhergehenden Ansprüche, wobei die bereitgestellte Installationsreferenz (210) eine vordefinierte Spezifikation über einen modularen Aufbau der Maschine (1) umfasst, insbesondere über eine Verschaltung der Installationselemente (10) in der Form von Kabeln und/oder Bauteilen mittels der elektrischen Komponente (4) in der Form von Verbindungsmodulen (4), vorzugsweise umfassend einen Elektro-Anschlussplan.

12. Das Verfahren (100) nach einem der vorhergehenden Ansprüche, wobei ein digitaler Zwilling der Maschine (1) anhand der Anlagenspezifikation (220) generiert und angezeigt wird, wobei die erzeugte wenigstens eine Installationsinformation (230) in dem angezeigten digitalen Zwilling dargestellt wird.

13. Ein System (2) für eine computer-gestützte Installation von räumlich dezentral angeordneten, elektrischen Komponenten (4) einer Maschine (1), umfassend
eine Vorrichtung (30) zur Datenverarbeitung, umfassend Mittel zur Ausführung der Schritte des Verfahrens (100) nach einem der vorhergehenden Ansprüche;
einen Datenspeicher (33) für die Bereitstellung der Installationsreferenz (210) und Anlagenspezifikation (220).

14. Ein Computerprogramm (20), umfassend Befehle, die bei der Ausführung des Computerprogramms (20) durch einen Computer (30) diesen veranlassen, die Schritte des Verfahrens (100) nach einem der Ansprüche 1 bis 12 auszuführen.

15. Eine Vorrichtung (30) zur Datenverarbeitung, umfassend Mittel zur Ausführung der Schritte des Verfahrens (100) nach einem der Ansprüche 1 bis 12.

## Claims

1. A method (100) for a computer-aided installation of spatially decentralised, electrical components (4) of a machine (1), comprising:
Providing (101) an installation reference (210) which specifies an assignment of at least one installation element (10) and at least one electrical component (4), in the form of a connection module (4) for connection to the installation element (10) and further installation elements (10), for the installation;
Providing (102) a system specification (220) specific to segments of the machine (1); and
Generating (103) at least one installation information (230) for assisting a user for the installation based on the provided installation reference (210) and the provided system specification (220),
wherein the generation (103) of the at least one installation information (230) comprises the following steps in order to take into account segments that are similar in terms of installation for the installation information to be generated:
Selecting at least one of the segments;
Comparing the at least one selected segment with at least one reference segment of the provided installation reference (210) according to a predetermined installation rule; and
Providing the at least one installation information (230) based on the comparison, wherein
the at least one installation information (230) comprises at least one machine-specific installation instruction based on the installation reference (210).

2. The method (100) according to claim 1, wherein selecting the at least one of the segments comprises:
Selecting at least one system component of the machine based on the system specification (220)
and that the comparison of the at least one selected segment with the at least one reference segment comprises:
Comparing the at least one selected segment with the at least one reference segment in the form of at least one reference component of the provided installation reference (210) based on the predetermined installation rule in the form of a guideline.

3. The method (100) according to claim 2, wherein comparing the at least one selected segment comprises the following steps:
Analysing a plurality of reference segments of the provided installation reference (210) with respect to a suitability for the selected segment, wherein the reference segments each represent a part, preferably an assembly, of the machine (1);
Selecting a reference segment suitable for the selected segment from the analysed reference segments based on the analysis; and
Comparing the selected segment with the selected reference segment using the predetermined installation rule.

4. The method (100) according to claim 2 or 3, wherein providing the at least one installation information (230) comprises the following steps:
Identifying installation instructions based on the comparison;
Analysing the respective identified installation instruction with regard to a suitability as an installation instruction for the selected segment; and
Selecting at least one suitable installation instruction from the analysed installation instructions based on the analysis.

5. The method (100) according to claim 4, wherein the method (100) further comprises the following step:
Initiating an output of the selected installation instruction for the user.

6. The method (100) according to claim 5, wherein initiating the output of the selected installation instruction comprises at least one of the following steps:
Initiating a display of the selected installation instruction on a user interface (32) of a computer (31), preferably a portable computer (31), wherein preferably the user interface (32) visualises a digital twin of at least a part of the machine (1), and particularly preferably visualises a mechanical and/or electrical structure and/or electrical connection diagram of the part of the machine (1);
Initiating an indication of the selected installation instruction at a connection point (42), in particular a slot (42), of the electrical component (4);
Initiating an output of the selected installation instruction as an instruction for the user to connect the installation element (10) to a specific connection point (42) of the electrical component (4), wherein preferably the connection point (42) is determined based on an electrical and/or mechanical installation specification (200), in particular based on the ECAD and/or MCAD data;
Initiating an indication of a connection point (42), in particular a slot (42), of the electrical component (4) for the installation element (10) by means of augmented reality based on the selected installation instruction; and
Initiating an acoustic output, in particular a voice output, of the selected installation instruction.

7. The method (100) according to any one of the preceding claims, wherein the provided installation reference (210) comprises, at least in part, one or more of the following reference data:
first reference data relating to a mechanical arrangement of a reference system, in particular MCAD data;
second reference data relating to the electrical cabling of a reference plant, in particular ECAD data;
third reference data comprising one or more images, preferably scans, of an installed machine (1) or plant components; and
fourth reference data, including plant environment data.

8. The method (100) according to any one of the preceding claims, wherein the method (100) comprises at least one of the following further steps:
Initiating a storage of the generated at least one installation information (230) as an executed installation;
Initiating a storage of the generated at least one installation information (230) as a further part of the provided installation reference (210).

9. The method (100) according to any one of the preceding claims, wherein the system specification (220) comprises a topological arrangement of the electrical components (4) in which the electrical components are interconnected.

10. The method (100) according to any one of the preceding claims, wherein the provided installation reference (210) comprises an installation configuration and/or an installation documentation, which is stored in a data memory (33) and/or transmitted to the electrical component (4).

11. The method (100) according to any one of the preceding claims, wherein the provided installation reference (210) comprises a predefined specification about a modular structure of the machine (1), in particular about an interconnection of the installation elements (10) in the form of cables and/or components by means of the electrical component (4) in the form of connection modules (4), preferably comprising an electrical connection diagram.

12. The method (100) according to any one of the preceding claims, wherein a digital twin of the machine (1) is generated and displayed based on the system specification (220), wherein the generated at least one installation information (230) is represented in the displayed digital twin.

13. A system (2) for a computer-aided installation of spatially decentralised, electrical components (4) of a machine (1), comprising
a data processing apparatus (30) comprising means for carrying out the steps of the method (100) according to any one of the preceding claims;
a data memory (33) for providing the installation reference (210) and system specification (220).

14. A computer program (20), comprising instructions which, when the computer program (20) is executed by a computer (30), cause the computer (30) to perform the steps of the method (100) according to any one of claims 1 to 12.

15. A data processing apparatus (30), comprising means for carrying out the steps of the method (100) according to any one of claims 1 to 12.

## Revendications

1. Procédé (100) d'installation assistée par ordinateur de composants électriques (4) d'une machine (1), agencés de manière décentralisée dans l'espace, comprenant :
la mise à disposition (101) d'une référence d'installation (210) qui spécifie une affectation d'au moins un élément d'installation (10) et d'au moins un composant électrique (4), sous la forme d'un module de connexion (4) pour la connexion à l'élément d'installation (10) et à d'autres éléments d'installation (10), pour l'installation ;
la mise à disposition (102) d'une spécification d'installation (220) qui est spécifique à des segments de la machine (1) ; et
la génération (103) d'au moins une information d'installation (230) pour aider un utilisateur pour l'installation sur la base de la référence d'installation mise à disposition (210) et de la spécification d'installation mise à disposition (220),
la génération (103) de l'au moins une information d'installation (230) comprenant les étapes suivantes pour prendre en compte des segments similaires au niveau de vue de l'installation pour l'information d'installation à générer :
la sélection d'au moins un des segments ;
la comparaison de l'au moins un segment sélectionné à au moins un segment de référence de la référence d'installation mise à disposition (210) à l'aide d'une consigne d'installation prédéterminée ; et
la mise à disposition de ladite au moins une information d'installation (230) sur la base de ladite comparaison,
l'au moins une information d'installation (230) comprenant au moins une instruction d'installation propre à la machine sur la base de la référence d'installation (210).

2. Procédé (100) selon la revendication 1, dans lequel la sélection d'au moins un des segments comprend :
la sélection d'au moins un composant d'installation de la machine à l'aide de la spécification d'installation (220) ;
et en ce que la comparaison de l'au moins un segment sélectionné avec l'au moins un segment de référence comprend :
la comparaison de l'au moins un segment sélectionné avec l'au moins un segment de référence sous la forme d'au moins un composant de référence de la référence d'installation mise à disposition (210) à l'aide de la consigne d'installation prédéterminée sous la forme d'une directive.

3. Procédé (100) selon la revendication 2, dans lequel la comparaison d'au moins un segment sélectionné comprend les étapes suivantes :
l'analyse d'une pluralité de segments de référence de la référence d'installation mise à disposition (210) en ce qui concerne une adéquation pour le segment sélectionné, les segments de référence représentant chacun une partie, de préférence un sous-ensemble, de la machine (1) ;
la sélection d'un segment de référence approprié pour le segment sélectionné parmi les segments de référence analysés, sur la base de l'analyse ; et
la comparaison du segment sélectionné avec le segment de référence sélectionné à l'aide de la consigne d'installation prédéterminée.

4. Procédé (100) selon la revendication 2 ou 3, dans lequel la mise à disposition d'au moins une information d'installation (230) comprend les étapes suivantes :
l'dentification des instructions d'installation basées sur la comparaison ;
l'analyse de chaque instruction d'installation identifiée pour déterminer si elle convient comme instruction d'installation pour le segment sélectionné ; et
la sélection d'au moins une instruction d'installation appropriée parmi les instructions d'installation analysées sur la base de l'analyse.

5. Procédé (100) selon la revendication 4, dans lequel le procédé (100) comprend en outre l'étape suivante :
l'initiation d'une émission de l'instruction d'installation sélectionnée pour l'utilisateur.

6. Procédé (100) selon la revendication 5, dans lequel l'initiation de l'émission de l'instruction d'installation sélectionnée comprend au moins une des étapes suivantes :
l'initiation d'un affichage de l'instruction d'installation sélectionnée sur une interface utilisateur (32) d'un ordinateur (31), de préférence un ordinateur portable (31), de préférence l'interface utilisateur (32) visualisant un jumeau numérique d'au moins une partie de la machine (1), et de manière particulièrement préférée visualisant une structure mécanique et/ou électrique et/ou un schéma de connexions électrique de la partie de la machine (1) ;
l'initiation d'un affichage de l'instruction d'installation sélectionnée à un point de raccordement (42), en particulier un emplacement (42), du composant électrique (4) ;
l'initiation d'une émission de l'instruction d'installation sélectionnée en tant qu'instruction pour l'utilisateur de raccorder l'élément d'installation (10) à un point de raccordement (42) déterminé du composant électrique (4), le point de raccordement (42) étant de préférence déterminé à l'aide d'une consigne d'installation électrique et/ou mécanique (200), en particulier à l'aide des données ECAD et/ou MCAD ;
l'initiation d'une indication d'un point de raccordement (42), en particulier d'un emplacement (42), du composant électrique (4) pour l'élément d'installation (10) au moyen de la réalité étendue sur la base de l'instruction d'installation sélectionnée ; et
l'initiation d'une émission sonore, en particulier une émission vocale, de l'instruction d'installation sélectionnée.

7. Procédé (100) selon l'une des revendications précédentes, dans lequel la référence d'installation mise à disposition (210) comprend au moins partiellement une ou plusieurs des données de référence suivantes :
premières données de référence concernant un agencement mécanique d'une installation de référence, en particulier des données MCAD ;
deuxièmes données de référence concernant un câblage électrique d'une installation de référence, en particulier des données ECAD ;
troisièmes données de référence, comprenant une ou plusieurs images, de préférence des scans, d'une machine installée (1) ou de composants d'installation ; et
quatrièmes données de référence, comprenant les données relatives à l'environnement de l'installation.

8. Procédé (100) selon l'une des revendications précédentes, dans lequel le procédé (100) comprend au moins l'une des étapes supplémentaires suivantes :
l'initiation d'un enregistrement de l'au moins une information d'installation générée (230) en tant qu'installation exécutée ;
l'initiation d'un enregistrement de l'au moins une information d'installation générée (230) en tant que partie supplémentaire de la référence d'installation mise à disposition (210).

9. Procédé (100) selon l'une des revendications précédentes, dans lequel la spécification d'installation (220) comprend un agencement topologique des composants électriques (4) dans lequel les composants électriques sont interconnectés.

10. Procédé (100) selon l'une des revendications précédentes, dans lequel la référence d'installation (210) mise à disposition comprend une configuration d'installation et/ou une documentation d'installation qui est déposée dans une mémoire de données (33) et/ou transmise au composant électrique (4).

11. Procédé (100) selon l'une des revendications précédentes, dans lequel la référence d'installation (210) mise à disposition comprend une spécification prédéfinie sur une structure modulaire de la machine (1), notamment sur une interconnexion des éléments d'installation (10) sous la forme de câbles et/ou de composants au moyen du composant électrique (4) sous la forme de modules de connexion (4), comprenant de préférence un schéma de connexion électrique.

12. Procédé (100) selon l'une des revendications précédentes, dans lequel un jumeau numérique de la machine (1) est généré et affiché à l'aide de la spécification d'installation (220), l'au moins une information d'installation (230) générée étant représentée dans le jumeau numérique affiché.

13. Système (2) d'installation assistée par ordinateur de composants électriques (4) d'une machine (1) agencés de manière décentralisée dans l'espace, comprenant
un dispositif (30) de traitement de données comprenant des moyens pour exécuter les étapes du procédé (100) selon l'une des revendications précédentes ;
une mémoire de données (33) pour mettre à disposition la référence d'installation (210) et la spécification d'installation (220).

14. Programme informatique (20) comprenant des instructions qui, lorsque le programme informatique (20) est exécuté par un ordinateur (30), amènent ce dernier à exécuter les étapes du procédé (100) selon l'une des revendications 1 à 12.

15. Dispositif (30) de traitement de données comprenant des moyens pour exécuter les étapes du procédé (100) selon l'une des revendications 1 à 12.
